# EUROPEAN PATENT APPLICATION

(11) **EP 3 016 228 A1**
(43) Date of publication of application: **04.05.2016**
(21) Application number: 15189856.6
(22) Date of filing: 14.10.2015
(51) Int. Cl.: H02J 3/38, H02J 3/32

(54) **PHOTOVOLTAIC POWER GENERATION SYSTEM, WIND POWER GENERATION SYSTEM AND CONTROL METHODS THEREOF**

(30) Priority: 29.10.2014 CN 201410598339
(71) Applicant: Sungrow Power Supply Co., Ltd., 230088 Hefei (CN)
(72) Inventor: YU, Yong, 230088 Hefei (CN); CAO, Wei, 230088 Hefei (CN); JIANG, Tao, 230088 Hefei (CN); MIAO, Sheng, 230088 Hefei (CN)
(74) Representative: Tappe, Udo

(57) **Abstract**

A photovoltaic power generation system and a control method thereof are provided. The photovoltaic power generation system includes a photovoltaic power generation system, a photovoltaic inverter, a bidirectional DC/DC converter, a storage battery and a control device. The photovoltaic inverter performs MPPT control on the photovoltaic power generation device, so that the generation power of the photovoltaic power generation device is maximized (S22). In a case that the generation power of the photovoltaic power generation device is greater than the limited generation power of the power grid, the bidirectional DC/DC converter is controlled to run in the forward direction to charge the storage battery, so that the output power of the photovoltaic inverter is smaller than or equal to the limited generation power of the power grid (S24 and S25). Therefore, the generation power of the photovoltaic power generation system does not need to be limited, which ensures that the photovoltaic power generation system runs at full power, and improves the utilization rate of the system. In a case that the generation power of the photovoltaic power generation device is smaller than the limited generation power of the power grid, the bidirectional DC/DC converter is controlled to run in the reverse direction to discharge the storage battery, so that the total quantity of the electric energy fed into the power grid is increased within the limited generation power of the power grid (S24 and S26). Further, a similar wind power generation system and a control method thereof are provided.

## Description

### FIELD

The present disclosure relates to the technical field of new energy power generation, in particular to a photovoltaic power generation system, a wind power generation system and control methods thereof.

### BACKGROUND

With the continuous development of new energy power generation technology, new energy power generation systems such as a photovoltaic power generation system and a wind power generation system are widely used. The conventional new energy power generation system mainly includes a new energy power generation device and an inverter. An alternating current (AC) side of the inverter is connected to a power grid, and the inverter converts the electric energy output by the new energy power generation device into an alternating current, and feeds the alternating current into the power grid.

The power grid generally has an allowable generation power (abbreviated as a limited generation power). The power of the electric energy fed by the inverter into the power grid should not exceed the limited generation power. Thus, if the power of the electric energy generated by the new energy power generation device exceeds the limited generation power, the new energy power generation system should limit the power generation, which results in a power loss and reduces the utilization rate of the new energy power generation system.

Therefore, it is urgent for those skilled in the art to improve the utilization rate of the new energy power generation system.

### SUMMARY

In view of above, it is provided a photovoltaic power generation system with a high utilization rate, a wind power generation system with a high utilization rate, and control methods thereof.

To achieve the above object, technical solutions are provided according to the present disclosure.

A photovoltaic power generation system is provided, which includes a photovoltaic power generation device, a photovoltaic inverter, a bidirectional DC/DC converter, a storage battery and a control device.

A DC side of the photovoltaic inverter is connected to an output terminal of the photovoltaic power generation device. An AC side of the photovoltaic inverter is connected to a power grid. The photovoltaic inverter is configured to obtain an output current value and an output voltage value of the photovoltaic power generation device and to perform maximum power point tracking (MPPT) control on the photovoltaic power generation device based on the output current value and the output voltage value.

A high-voltage side of the bidirectional DC/DC converter is connected to the DC side of the photovoltaic inverter, and a low-voltage side of the bidirectional DC/DC converter is connected to the storage battery.

The control device is connected to the photovoltaic inverter and the bidirectional DC/DC converter respectively, and is configured to obtain a generation power of the photovoltaic power generation device. In a case that the generation power of the photovoltaic power generation device is greater than a limited generation power of the power grid, the control device controls the bidirectional DC/DC converter to run in a forward direction to charge the storage battery, and in a case that the generation power of the photovoltaic power generation device is smaller than the limited generated power, the control device controls the bidirectional DC/DC converter to run in a reverse direction to discharge the storage battery, so that the output power of the photovoltaic inverter is smaller than or equal to the limited generation power of the power grid.

Preferably, in the photovoltaic power generation system, when the control device controls the bidirectional DC/DC converter to run in the forward direction to charge the storage battery, the charging power equals to a difference between the generation power of the photovoltaic power generation device and the limited generation power of the power grid. When the control device controls the bidirectional DC/DC converter to run in the reverse direction to discharge the storage battery, the discharging power equals to a difference between the limited generation power of the power grid and the generation power of the photovoltaic power generation device.

Preferably, in the photovoltaic power generation system, the power storage capacity of the storage battery is greater than or equal to an electric quantity generated by the photovoltaic power generation device to be limited within one day.

A control method, applied to the photovoltaic power generation system, is provided according to the present disclosure. The method includes :
obtaining, by the photovoltaic inverter, an output current value and an output voltage value of the photovoltaic power generation device;
performing, by the photovoltaic inverter, MPPT control on the photovoltaic power generation device based on the output current value and the output voltage value;
obtaining, by the control device, a generation power of the photovoltaic power generation device;
comparing, by the control device, the generation power of the photovoltaic power generation device with a limited generation power of the power grid;
controlling, by the control device, the bidirectional DC/DC converter to run in a forward direction to charge the storage battery, if the generation power of the photovoltaic power generation device is greater than the limited generation power of the power grid, so that the output power of the photovoltaic inverter is smaller than or equal to the limited generation power of the power grid; and
controlling, by the control device, the bidirectional DC/DC converter to run in a reverse direction to discharge the storage battery, if the generation power of the photovoltaic power generation device is smaller than the limited generation power of the power grid, where the output power of the photovoltaic inverter is smaller than or equal to the limited generation power of the power grid.

Preferably, the charging power for the storage battery equals to a difference between the generation power of the photovoltaic power generation device and the limited generation power of the power grid, and the discharging power for the storage battery equals to a difference between the limited generation power of the power grid and the generation power of the photovoltaic power generation device.

A wind power generation system is further provided according to the present disclosure. The system includes a wind power generation device, a wind energy inverter, a bidirectional DC/DC converter, a storage battery and a control device.

The wind power generation device includes a wind power generator set and an AC/DC converter, and an AC side of the AC/DC converter is connected to an output terminal of the wind power generator set.

A DC side of the wind energy inverter is connected to a DC side of the AC/DC converter, and an AC side of the wind energy inverter is connected to a power grid. The wind energy inverter is configured to obtain an output current value and an output voltage value at the DC side of the AC/DC converter.

A high-voltage side of the bidirectional DC/DC converter is connected to the DC side of the wind energy inverter, and a low-voltage side of the bidirectional DC/DC converter is connected to the storage battery.

The control device is connected to the wind energy inverter and the bidirectional DC/DC converter respectively, and is configured to obtain a generation power of the wind power generation device. In a case that the generation power of the wind power generation device is greater than a limited generation power of the power grid, the control device controls the bidirectional DC/DC converter to run in a forward direction to charge the storage battery, and in a case that the generation power of the wind power generation device is smaller than the limited generated power, the control device controls the bidirectional DC/DC converter to run in a reverse direction to discharge the storage battery, so that the output power of the wind energy inverter is smaller than or equal to the limited generation power of the power grid.

Preferably, in the wind power generation system, when the control device controls the bidirectional DC/DC converter to run in the forward direction to charge the storage battery, the charging power equals to a difference between the generation power of the wind power generation device and the limited generation power of the power grid. When the control device controls the bidirectional DC/DC converter to run in the reverse direction to discharge the storage battery, the discharging power equals to a difference between the limited generation power of the power grid and the generation power of the wind power generation device.

Preferably, in the wind power generation system, the power storage capacity of the storage battery is greater than or equal to an electric quantity generated by the wind power generation device to be limited within one day.

A control method, applied to the wind power generation system, is further provided according to the present disclosure. The method includes
obtaining, by the wind energy inverter, an output current value and an output voltage value at the DC side of the AC/DC converter;
obtaining, by the control device, a generation power of the wind power generation device;
comparing, by the control device, the generation power of the wind power generation device with a limited generation power of the power grid;
controlling, by the control device, the bidirectional DC/DC converter to run in a forward direction to charge the storage battery, if the generation power of the wind power generation device is greater than the limited generation power of the power grid, so that the output power of the wind energy inverter is smaller than or equal to the limited generation power of the power grid; and
controlling, by the control device, the bidirectional DC/DC converter to run in a reverse direction to discharge the storage battery, if the generation power of the wind power generation device is smaller than the limited generation power of the power grid, where the output power of the wind energy inverter is smaller than or equal to the limited generation power of the power grid.

Preferably, the charging power for the storage battery equals to a difference between the generation power of the wind power generation device and the limited generation power of the power grid, and the discharging power for the storage battery equals to a difference between the limited generation power of the power grid and the generation power of the wind power generation device.

According to the descriptions above, the present disclosure has following beneficial effects.

In the photovoltaic power generation system according to the present disclosure, the photovoltaic inverter performs MPPT control on the photovoltaic power generation device, so that the generation power of the photovoltaic power generation device is maximized. In a case that the generation power of the photovoltaic power generation device is greater than the limited generation power of the power grid, the bidirectional DC/DC converter is controlled to run in the forward direction to charge the storage battery, so that the output power of the photovoltaic inverter is smaller than or equal to the limited generation power of the power grid. Therefore, the generation power of the photovoltaic power generation system does not need to be limited, which ensures that the photovoltaic power generation system runs at full power, and improves the utilization rate of the system. In a case that the generation power of the photovoltaic power generation device is smaller than the limited generation power of the power grid, the bidirectional DC/DC converter is controlled to run in the reverse direction to discharge the storage battery, so that the total quantity of the electric energy fed into the power grid is increased within the limited generation power of the power grid.

In the wind power generation system according to the present disclosure, in a case that the generation power of the wind power generation device is greater than the limited generation power of the power grid, the bidirectional DC/DC converter is controlled to run in the forward direction to charge the storage battery, so that the output power of the wind energy inverter is smaller than or equal to the limited generation power of the power grid. Therefore, the generation power of the wind power generation system does not need to be limited, which ensures that the wind power generation system runs at full power, and improves the utilization rate of the system. In a case that the generation power of the wind power generation device is smaller than the limited generation power of the power grid, the bidirectional DC/DC converter is controlled to run in the reverse direction to discharge the storage battery, so that the total quantity of the electric energy fed into the power grid is increased within the limited generation power of the power grid.

### BRIEF DESCRIPTION OF THE DRAWINGS

To illustrate technical solutions according to embodiments of the disclosure or in the conventional technology more clearly, the following briefly describes the drawings according to embodiments of the disclosure. Apparently, the drawings are only some embodiments of the present disclosure, and other drawings may be obtained by those skilled in the art according to those drawings without creative efforts.
Figure 1 is a structural schematic diagram of a photovoltaic power generation system according to the present disclosure;
Figure 2 is a flowchart of a control method applied to the photovoltaic power generation system as shown in Figure 1;
Figure 3 is a structural schematic diagram of a wind power generation system according to the present disclosure; and
Figure 4 is a flowchart of a control method applied to the wind power generation system as shown in Figure 3.

### DETAILED DESCRIPTION

The technical solutions of embodiments of the present disclosure are described clearly and completely hereinafter in conjunction with the drawings. Apparently, the described embodiments are only a few embodiments rather than all embodiments of the disclosure. Any other embodiments obtained by those skilled in the art on the basis of the embodiments of the present disclosure without creative work will fall within the scope of the present disclosure.

A photovoltaic power generation system is disclosed herein. In a case that a power grid is configured with a limited generation power, the photovoltaic power generation system does not need to limit power generation, and has a high utilization rate.

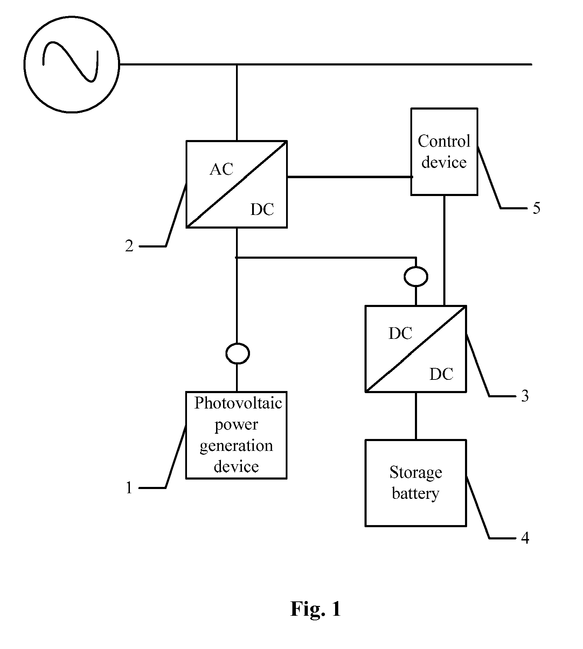

Figure 1 is a structural schematic diagram of a photovoltaic power generation system according to the present disclosure. The photovoltaic power generation system includes a photovoltaic power generation device 1, a photovoltaic inverter 2, a bidirectional DC/DC converter 3, a storage battery 4 and a control device 5.

The photovoltaic power generation device 1 is configured to convert solar energy into electric energy and output the electric energy.

A DC side of the photovoltaic inverter 2 is connected to an output terminal of the photovoltaic power generation device 1, and an AC side of the photovoltaic inverter 2 is connected to a power grid. The photovoltaic inverter 2 is configured to obtain an output current value and an output voltage value of the photovoltaic power generation device 1, and perform maximum power point tracking(MPPT) control on the photovoltaic power generation device 1 based on the output current value and the output voltage value, so that the generation power (i.e., output power) of the photovoltaic power generation device 1 is maximized.

It should be noted that a voltage detection device and a current detection device may be arranged at the output terminal of the photovoltaic power generation device 1, and the photovoltaic inverter 2 obtains the output voltage and the output current value of the photovoltaic power generation device 2 through the voltage detection device and the current detection device. In addition, the photovoltaic inverter 2 may perform MPPT control on the photovoltaic power generation device based on a conventional MPPT algorithm, which is not described here in detail.

A high-voltage side of the bidirectional DC/DC converter 3 is connected to the DC side of the photovoltaic inverter 2, and a low-voltage side of the bidirectional DC/DC converter 3 is connected to the storage battery 4. The bidirectional DC/DC converter 3 can achieve a bidirectional flow of the electric energy.

The control device 5 is connected to the photovoltaic inverter 2 and the bidirectional DC/DC converter 3 respectively, and is configured to obtain the generation power of the photovoltaic power generation device 1. In a case that the generation power of the photovoltaic power generation device 1 is greater than the limited generation power of the power grid, the control device 5 controls the bidirectional DC/DC converter to run in a forward direction to charge the storage battery 4, and in a case that the generation power of the photovoltaic power generation device 1 is smaller than the limited generation power of the power grid, the control device 5 controls the bidirectional DC/DC converter to run in a reverse direction to discharge the storage battery, so that the output power of the photovoltaic inverter is smaller than or equal to the limited generation power of the power grid.

The photovoltaic inverter 2 is configured to perform MPPT control on the photovoltaic power generation device 1, to maximize the generation power of the photovoltaic power generation device 1. In a case that the generation power of the photovoltaic power generation device 1 is greater than the limited generation power of the power grid, the bidirectional DC/DC converter 3 is controlled to run in the forward direction to charge the storage battery 4 with the electric energy generated by the photovoltaic power generation device 1, which stores a part of the electric energy generated by the photovoltaic power generation device 1 into the storage battery 4, and reduces the output power of the photovoltaic inverter 2. The output power of the photovoltaic inverter 2 is smaller than or equal to the limited generation power of the power grid by adjusting the charging power. Therefore, the generation power of the photovoltaic system does not need to be limited, which ensures that the photovoltaic power generation system runs at full power, and improves the utilization rate of the system. In a case that the generation power of the photovoltaic power generation device 1 is smaller than the limited generation power of the power grid, the bidirectional DC/DC converter 3 is controlled to run in the reverse direction to feed the electric energy stored in the storage battery 4 into the power grid, which releases the electric energy stored in the storage battery in a timely manner to make a preparation for a next charge, and increases the output power of the photovoltaic inverter 2, so that the total quantity of the electric energy fed into the power grid is increased within the limited generation power of the power grid.

In the photovoltaic power generation system according to the present disclosure, the photovoltaic inverter 2 performs MPPT control on the photovoltaic power generation device 1, to maximize the generation power of the photovoltaic power generation device 1. In a case that the generation power of the photovoltaic power generation device 1 is greater than the limited generation power of the power grid, the bidirectional DC/DC converter 3 is controlled to run in the forward direction to charge the storage battery 4, so that the output power of the photovoltaic inverter 2 is smaller than or equal to the limited generation power of the power grid. Therefore, the generation power does not need to be limited, which ensures that the photovoltaic power generation system runs at full power, and improves the utilization rate of the system. In a case that the generation power of the photovoltaic power generation device 1 is smaller than the limited generation power of the power grid, the bidirectional DC/DC converter 3 is controlled to run in the reverse direction to discharge the storage battery 4, which increases the total quantity of the electric energy fed into the power grid within the limited generation power of the power grid.

In an implementation, the photovoltaic inverter 2 may transmit the output current value and the output voltage value of the photovoltaic power generation device 1 to the control device 5, and the control device 5calculates the generation power of the photovoltaic power generation device 1 with the received output current value and output voltage value. Alternatively, the photovoltaic inverter may calculate the generation power of the photovoltaic power generation device 1 with the output current value and the output voltage value of the photovoltaic power generation device 1, and transmit the calculated generation power of the photovoltaic power generation device 1 to the control device 5.

In a preferred embodiment, , when the control device 5 controls the bidirectional DC/DC converter 3 to run in the forward direction to charge the storage battery 4, the charging power is a difference between the generation power of the photovoltaic power generation device 1 and the limited generation power of the power grid. When the control device 5 controls the bidirectional DC/DC converter 3 to run in the reverse direction to discharge the storage battery 4, the discharging power is a difference between the limited generation power of the power grid and the generation power of the photovoltaic power generation device 1.

In a case that the generation power of the photovoltaic power generation device 1 is greater than the limited generation power of the power grid, the charging power for the storage battery 4 is a difference between the generation power of the photovoltaic power generation device 1 and the limited generation power of the power grid, so that the output power of the photovoltaic inverter 2 approximately equals to the limited generation power of the power grid. Therefore, the electric energy generated by the photovoltaic power generation device 1 is directly fed into the power grid to the greatest extent, and accordingly the quantity of the electric energy stored into the storage battery 4 is reduced.

In a case that the generation power of the photovoltaic power generation device 1 is smaller than the limited generation power of the power grid, the discharging power for the storage battery 4 is a difference between the limited generation power of the power grid and the generation power of the photovoltaic power generation device 1, so that the output power of the photovoltaic inverter 2 approximately equals to the limited generation power of the power grid. Therefore, the total quantity of the electric energy fed into the power grid by the photovoltaic power generation system is increased within the limited generation power of the power grid, and the remaining energy storage capacity of the storage battery 4 is also increased.

In an implementation, the energy storage capacity of the storage battery 4 is equal to or greater than an electric quantity generated by the photovoltaic power generation device 1 to be limited within one day. Optionally, the energy storage capacity of the storage battery 4 is equal to the electric quantity generated by the photovoltaic power generation device to be limited within one day, which can satisfy requirement of energy storage of the system and reduce the cost of the system.

For example, in a case that the generation power of the photovoltaic power generation device 1 is 100KW, the limited generation power of the power grid is 80KW and the generation power is required to be limited for 1 hour a day on average, the storage battery 4 is required to store an electric quantity of 20KWh. Considering the margin and efficiency of the storage battery 4, it is required that the storage battery is configured with an electric quantity of at least 40KWh, and if the storage battery is configured with a voltage of 200V, a 200A storage battery is required.

In the above photovoltaic power generation system according to the present disclosure, the photovoltaic power generation device 1 may be a photovoltaic module (i.e., a solar panel) or a photovoltaic array.

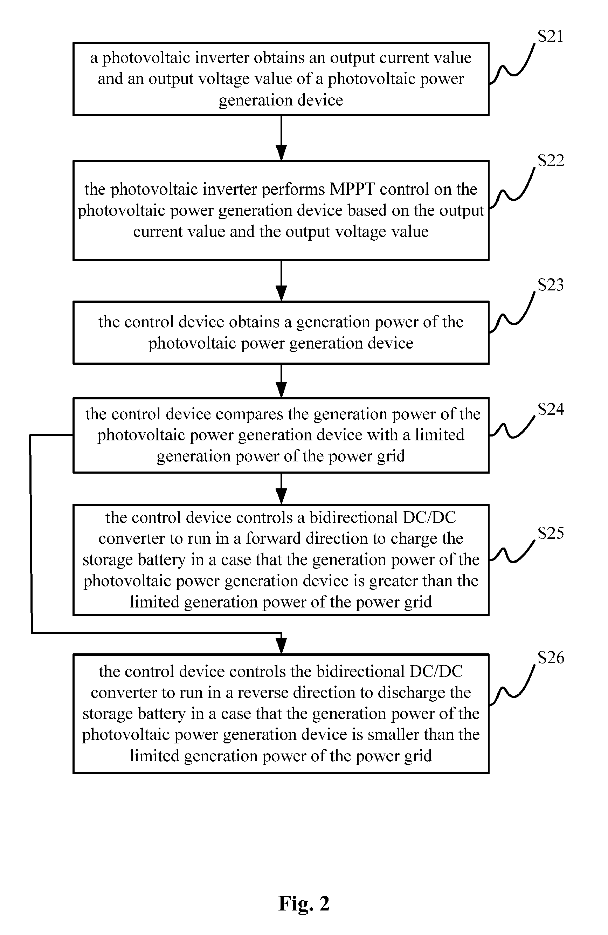

A control method, applied to the above photovoltaic power generation system, is further provided according to the present disclosure. As shown in Figure 2, the method includes the steps S21 to S25.

In step S21, a photovoltaic inverter obtains an output current value and an output voltage value of a photovoltaic power generation device.

In step S22, the photovoltaic inverter performs MPPT control on the photovoltaic power generation device based on the output current value and the output voltage value.

In Step 23, the control device obtains a generation power of the photovoltaic power generation device.

In Step 24, the control device compares the generation power of the photovoltaic power generation device with a limited generation power of the power grid.

In Step 25, the control device controls a bidirectional DC/DC converter to run in a forward direction to charge the storage battery in a case that the generation power of the photovoltaic power generation device is greater than the limited generation power of the power grid, so that the output power of the photovoltaic inverter is smaller than or equal to the limited generation power of the power grid.

In Step 26, the control device controls the bidirectional DC/DC converter to run in a reverse direction to discharge the storage battery in a case that the generation power of the photovoltaic power generation device is smaller than the limited generation power of the power grid, where the output power of the photovoltaic inverter is smaller than or equal to the limited generation power of the power grid.

Based on the control method according to the present disclosure, the generation power of the photovoltaic power generation device can be maximized. In a case that the generation power of the photovoltaic power generation device is greater than the limited generation power of the power grid, the storage battery is charged to make the output power of the photovoltaic inverter smaller than or equal to the limited generation power of the power grid, so that the generation power of the photovoltaic power generation system dose not needed to be limited, which ensures that the photovoltaic power generation system runs at full power, and improves the utilization rate of the system. In a case that the generation power of the photovoltaic power generation device is smaller than the limited generation power of the power grid, the storage battery is discharged to increase the total quantity of the energy fed into the power grid within the limited generation power of the power grid. In addition, in the control method, the generation power of the photovoltaic power generation device is compared with the limited power of the power grid, to determine subsequent processing strategies, which has a simple algorithm.

In an implementation, the charging power for the storage battery is preferably a difference between the generation power of the photovoltaic power generation device and the limited generation power of the power grid, and the discharging power for the storage battery is preferably a difference between the limited generation power of the power grid and the generation power of the photovoltaic power generation device.

A wind power generation system is further provided according to the present disclosure. In a case that a power grid is configured with a limited generation power, the generation power of the wind power generation system does not needed to be limited, thus the wind power generation system has a high utilization rate.

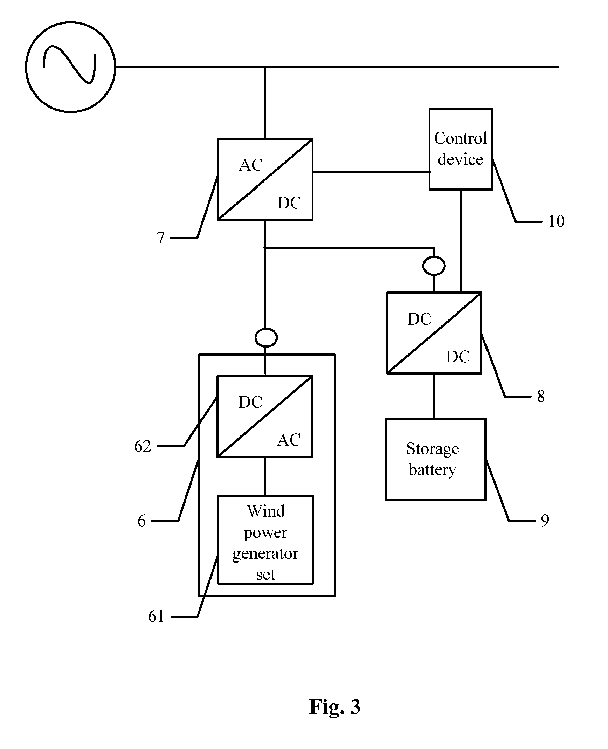

Figure 3 is a structural schematic diagram of a wind power generation system according to the present disclosure. The wind power generation system includes a wind power generation device 6, a wind energy inverter 7, a bidirectional DC/DC converter 8, a storage battery 9 and a control device 10.

The wind power generation device 6 includes a wind power generator set 61 and an AC/DC converter 62. The wind power generator set 61 generates electric energy by the force of wind. An AC side of the AC/DC converter 62 is connected to an output terminal of the wind power generator set 61, and the AC/DC converter 62 processes an alternating current generated by the wind power generator set 61 into a direct current, to facilitate the subsequent grid-connection processing.

A DC side of the wind energy inverter 7 is connected to a DC side of the AC/DC converter 62, and an AC side of the wind energy inverter 7 is connected to a power grid. The wind energy inverter 7 is configured to convert the direct current output by the AC/DC converter 62 into an alternating current matching the power grid. The wind energy inverter 7 is also configured to obtain an output current value and an output voltage value at the DC side of the AC/DC converter 62.

It should be noted that a voltage detection device and a current detection device may be arranged at the DC side of the AC/DC converter 62. The wind energy inverter 7 obtains the output current value and the output voltage value at the DC side of the AC/DC converter 62 through the voltage detection device and the current detection device.

A high-voltage side of the bidirectional DC/DC converter 8 is connected to the DC side of the wind energy inverter 7, and a low-voltage side of the bidirectional DC/DC converter 8 is connected to the storage battery 9. The bidirectional DC/DC converter 8 can achieve a bidirectional flow of the electric energy.

The control device 10 is connected to the wind energy inverter 7 and the bidirectional DC/DC converter 8 respectively, and is configured to obtain a generation power of the wind power generation device 6. In a case that the generation power of the wind power generation device 6 is greater than a limited generation power of the power grid, the bidirectional DC/DC converter 8 is controlled to run in a forward direction to charge the storage battery 9, and in a case that the generation power of the wind power generation device 6 is smaller than the limited generation power of the power grid, the bidirectional DC/DC converter 8 is controlled to run in a reverse direction to discharge the storage battery 9, so that the output power of the wind energy inverter 7 is smaller than or equal to the limited generation power of the power grid.

In a case that the generation power of the wind power generation device 6 is greater than the limited generation power of the power grid, the bidirectional DC/DC converter 8 is controlled to run in the forward direction to charge the storage battery 9 with the electric energy generated by the wind power generation device 6, which stores a part of the electric energy generated by the wind power generation device 6 into the storage battery 9, and reduces the output power of the wind energy inverter 7. The output power of the wind energy inverter 7 is smaller than or equal to the limited generation power of the power grid by adjusting the charging power, so that the generation power of the wind power generation system does not need to be limited, which ensures the wind power generation system runs at full power, and improves the utilization rate of the system. In a case that the generation power of the wind power generation device 6 is smaller than the limited generation power of the power grid, the bidirectional DC/DC converter is controlled to run in the reverse direction to feed the electric energy stored in the storage battery 9 into the power grid, which can release the electric energy stored in the storage battery in a timely manner for a next charge, and increases the output power of the wind energy inverter 7, so that the total quantity of the electric energy fed into the power grid is increased within the limited generation power of the power grid.

In the above wind power generation system according to the present disclosure, in a case that the generation power of the wind power generation device 6 is greater than the limited generation power of the power grid, the bidirectional DC/DC converter 8 is controlled to run in the forward direction to charge the storage battery 9, so that the output power of the wind energy inverter 7 is smaller than or equal to the limited generation power of the power grid. Therefore, the generation power of the wind power generation system does not need to be limited, which ensures that the wind power generation system runs at full power, and improves the utilization rate of the system. In a case that the generation power of the wind power generation device 6 is smaller than the limited generation power of the power grid, the bidirectional DC/DC converter 8 is controlled to run in the reverse direction to discharge the storage battery 9, so that the total quantity of the electric energy fed into the power grid is increased within the limited generation power of the power grid.

In an implementation, the wind energy inverter 7 may transmit the output current value and the output voltage value of the AC/DC converter 62 to the control device 10, and the control device 10 calculates the generation power of the wind power generation device 6 with the received output current value and the output voltage value of the AC/DC converter 62. Alternatively, the wind energy inverter 7 may calculate the output power of the wind power generation device 6 with the output current value and the output voltage value of the AC/DC converter 62, and transmit the calculated generation power of the wind power generation device 6 to the control device 10.

In a preferred embodiment, when the control device 10 controls the bidirectional DC/DC converter 8 to run in the forward direction to charge the storage battery 9, the charging power equals to a difference between the generation power of the wind power generation device 6 and the limited generation power of the power grid. When the control device 10 controls the bidirectional DC/DC converter 8 to run in the reverse direction to discharge the storage battery 9, the discharging power equals to a difference between the limited generation power of the power grid and the generation power of the wind power generation device 6.

In a case that the generation power of the wind power generation device 6 is greater than the limited generation power of the power grid, the charging power for the storage battery 9 equals to the difference between the generation power of the wind power generation device 6 and the limited generation power of the power grid, so that the output power of the wind energy inverter 7 approximately equals to the limited generation power of the power grid. Therefore, the electric energy generated by the wind power generation device 6 can be directly fed into the power grid to the greatest extent, and accordingly the quantity of the electric energy stored in the storage battery 9 is reduced.

In a case that the generation power of the wind power generation device 6 is smaller than the limited generation power of the power grid, the discharging power for the storage battery 9 equals to the difference between the limited generation power of the power grid and the generation power of the wind power generation device 6, so that the output power of the wind energy inverter 7 approximately equals to the limited generation power of the power grid. Therefore, the total quantity of the electric energy fed into the power grid by the wind power generation system is increased within the limited generation power of the power grid, and the remaining energy storage capacity of the storage battery 9 is also increased.

In an implementation, the energy storage capacity of the storage battery 9 is greater than or equal to an electric quantity generated by the wind power generation device 6 to be limited within one day. Optionally, the energy storage capacity of the storage battery 9 is equal to the electric quantity generated by the wind power generation device 6 to be limited within one day, which can satisfy the requirement of the energy storage of the system, and reduces the cost of the system.

For example, in a case that the generation power of the wind power generation device 6 is 100KW, the limited generation power of the power grid is 80KW and the generation power is required to be limited for 1 hour a day on average, the storage battery 9 is required to store an electric energy of 20KWh. Considering the margin and efficiency of the storage battery 9, it is required that the storage battery is configured with an electric quantity of at least 40KWh, and if the storage is configured with a voltage of 200V, a 200A storage battery is required.

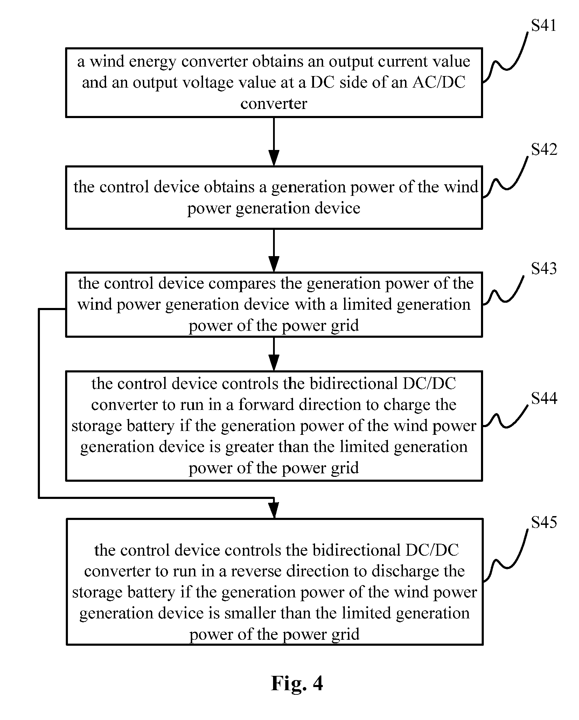

A control method, applied to the wind power generation system, is provided according to the present disclosure. As shown in Figure 4, the control method includes the following steps S41 to S45.

In step S41, a wind energy inverter obtains an output current value and an output voltage value at a DC side of an AC/DC converter.

In step S42, the control device obtains a generation power of the wind power generation device.

In step S43, the control device compares the generation power of the wind power generation device with a limited generation power of the power grid.

In step S44, the control device controls the bidirectional DC/DC converter to run in a forward direction to charge the storage battery if the generation power of the wind power generation device is greater than the limited generation power of the power grid, so that the output power of the wind energy inverter is smaller than or equal to the limited generation power of the power grid.

In step S45, the control device controls the bidirectional DC/DC converter to run in a reverse direction to discharge the storage battery if the generation power of the wind power generation device is smaller than the limited generation power of the power grid, where the output power of the wind energy inverter is smaller than or equal to the limited generation power of the power grid.

In the control method according to the present disclosure, in a case that the generation power of the wind power generation device is greater than the limited generation power of the power grid, the storage battery is charged so that the output power of the wind energy inverter is smaller than or equal to the limited generation power of the power grid, thus the generation power of the wind power generation system does not need to be limited, which ensures that the wind power generation system runs at full power, and improves the utilization rate of the system. In a case that the generation power of the wind power generation device is smaller than the limited generation power of the power grid, the storage battery is discharged to increase the total quantity of the electric energy fed into the power grid within the limited generation power of the power grid. In addition, in the control method, the generation power of the photovoltaic power generation device is compared with the limited power of the power grid, to determine subsequent processing strategies, which has a simple algorithm.

In an implementation, the charging power for the storage battery is a difference between the generation power of the wind power generation device and the limited generation power of the power grid, and the discharging power for the storage battery is preferably a difference between the limited generation power of the power grid and the generation power of the wind power generation device.

The photovoltaic power generation system and the wind power generation system according to the present disclosure each are provided with a bidirectional DC/DC converter and a storage battery. In a case that the generation power of the power generation device is greater than the limited generation power of the power grid, the storage battery is charged with the electric energy generated by the power generation device, so that the output power of the inverter is smaller than or equal to the limited generation power of the power grid, thus avoiding limiting the generation power of the system. In a case that the generation power of the power generation device is smaller than the limited generation power of the power grid, the electric energy stored in the storage battery is used for assisting in power supply, so that the total quantity of the electric energy fed into the power grid is increased within the limited generation power of the power grid.

It should be noted that a relationship term such as "the first" and "the second" herein is only used to distinguish one entity or operation from another entity or operation, and does not necessarily acquire or imply that there is an actual relationship or sequence between these entities or operations. Furthermore, terms "include", "comprise" or any other variations are intended to cover non-exclusive "include", so that a process, a method, an object or a device including a series of factors not only include the factors, but also include other factors not explicitly listed, or also include inherent factors of the process, the method, the object or the device. Without more limitation, a factor defined in a sentence "include one..." does not exclude a case that there is also another same factor in the process, the method, the object or the device including the described factor.

The embodiments of the present disclosure are described herein in a progressive manner, and each embodiment places emphasis on the difference from other embodiments, therefore one embodiment can refer to other embodiments for the same or similar parts.. For the apparatus disclosed in the embodiments, since the apparatus corresponds to the method disclosed in the embodiments, the description is relatively simple, and relevant part of the description may refer to the description according to the method embodiments.

Above descriptions of embodiments disclosed herein enable those skilled in the art to implement or use the invention. Numerous modifications made to embodiments of the present disclosure are obvious to those skilled in the art, and the general principle defined in the paper can be implemented in other embodiments without deviation from the spirit or scope of the present disclosure. Therefore, the present disclosure is not limited to the embodiments described herein, but in accordance with the widest scope consistent with the principle and novel features disclosed herein.

With the above descriptions of the disclosed embodiments, those skilled in the art may achieve or use the present disclosure. Various modifications to the embodiments are apparent for those skilled in the art. The general principle defined herein may be implemented in other embodiments without departing from the spirit or scope of the disclosure. Therefore, the present disclosure is not limited to the embodiments disclosed herein, but confirm to the widest scope in consistent with the principle and the novel features disclosed herein.

## Claims

1. A photovoltaic power generation system, comprising a photovoltaic power generation device, a photovoltaic inverter, a bidirectional DC/DC converter, a storage battery and a control device, wherein
a DC side of the photovoltaic inverter is connected to an output terminal of the photovoltaic power generation device, an AC side of the photovoltaic inverter is connected to a power grid, and the photovoltaic inverter is configured to obtain an output current value and an output voltage value of the photovoltaic power generation device and to perform maximum power point tracking control on the photovoltaic power generation device based on the output current value and the output voltage value;
a high-voltage side of the bidirectional DC/DC converter is connected to the DC side of the photovoltaic inverter, and a low-voltage side of the bidirectional DC/DC converter is connected to the storage battery; and
the control device is connected to the photovoltaic inverter and the bidirectional DC/DC converter respectively, and is configured to obtain a generation power of the photovoltaic power generation device, wherein the control device is configured to control the bidirectional DC/DC converter to run in a forward direction to charge the storage battery in a case that the generation power of the photovoltaic power generation device is greater than a limited generation power of the power grid, and to control the bidirectional DC/DC converter to run in a reverse direction to discharge the storage battery in a case that the generation power of the photovoltaic power generation device is smaller than the limited generation power, so that the output power of the photovoltaic inverter is smaller than or equal to the limited generation power of the power grid.

2. The photovoltaic power generation system according to claim 1, wherein
when the control device controls the bidirectional DC/DC converter to run in the forward direction to charge the storage battery, the charging power equals to a difference between the generation power of the photovoltaic power generation device and the limited generation power of the power grid; and
when the control device controls the bidirectional DC/DC converter to run in the reverse direction to discharge the storage battery, the discharging power equals to a difference between the limited generation power of the power grid and the generation power of the photovoltaic power generation device.

3. The photovoltaic power generation system according to claim 1 or claim 2, wherein, the power storage capacity of the storage battery is greater than or equal to an electric quantity generated by the photovoltaic power generation device to be limited within one day.

4. A control method, applied to the photovoltaic power generation system according to claim 1, comprising:
obtaining, by the photovoltaic inverter, an output current value and an output voltage value of the photovoltaic power generation device;
performing, by the photovoltaic inverter, maximum power point tracking control on the photovoltaic power generation device based on the output current value and the output voltage value;
obtaining, by the control device, a generation power of the photovoltaic power generation device;
comparing, by the control device, the generation power of the photovoltaic power generation device with a limited generation power of the power grid;
controlling, by the control device, the bidirectional DC/DC converter to run in a forward direction to charge the storage battery if the generation power of the photovoltaic power generation device is greater than the limited generation power of the power grid, so that the output power of the photovoltaic inverter is smaller than or equal to the limited generation power of the power grid; and
controlling, by the control device, the bidirectional DC/DC converter to run in a reverse direction to discharge the storage battery if the generation power of the photovoltaic power generation device is smaller than the limited generation power of the power grid, wherein the output power of the photovoltaic inverter is smaller than or equal to the limited generation power of the power grid.

5. The method according to claim 4, wherein, the charging power for the storage battery equals to a difference between the generation power of the photovoltaic power generation device and the limited generation power of the power grid, and the discharging power for the storage battery equals to a difference between the limited generation power of the power grid and the generation power of the photovoltaic power generation device.

6. A wind power generation system, comprising a wind power generation device, a wind energy inverter, a bidirectional DC/DC converter, a storage battery and a control device, wherein
the wind power generation device comprises a wind power generator set and an AC/DC converter, wherein an AC side of the AC/DC converter is connected to an output terminal of the wind power generator set;
a DC side of the wind energy inverter is connected to a DC side of the AC/DC converter, an AC side of the wind energy inverter is connected to a power grid and the wind energy inverter is configured to obtain an output current value and an output voltage value at the DC side of the AC/DC converter;
a high-voltage side of the bidirectional DC/DC converter is connected to the DC side of the wind energy inverter, and a low-voltage side of the bidirectional DC/DC converter is connected to the storage battery; and
the control device is connected to the wind energy inverter and the bidirectional DC/DC converter respectively, and is configured to obtain a generation power of the wind power generation device, wherein the control device is configured to control the bidirectional DC/DC converter to run in a forward direction to charge the storage battery in a case that the generation power of the wind power generation device is greater than a limited generation power of the power grid, and to control the bidirectional DC/DC converter to run in a reverse direction to discharge the storage battery in a case that the generation power of the wind power generation device is smaller than the limited generation power, so that the output power of the wind energy inverter is smaller than or equal to the limited generation power of the power grid.

7. The wind power generation system according to claim 6, wherein
when the control device controls the bidirectional DC/DC converter to run in the forward direction to charge the storage battery, the charging power equals to a difference between the generation power of the wind power generation device and the limited generation power of the power grid; and
when the control device controls the bidirectional DC/DC converter to run in the reverse direction to discharge the storage battery, the discharging power equals to a difference between the limited generation power of the power grid and the generation power of the wind power generation device.

8. The wind power generation system according to claim 6 or claim 7, wherein, the power storage capacity of the storage battery is greater than or equal to an electric quantity generated by the wind power generation device to be limited within one day.

9. A control method, applied to the wind power generation system according to claim 6, comprising:
obtaining, by the wind energy inverter, an output current value and an output voltage value at the DC side of the AC/DC converter;
obtaining, by the control device, a generation power of the wind power generation device;
comparing, by the control device, the generation power of the wind power generation device with a limited generation power of the power grid;
controlling, by the control device, the bidirectional DC/DC converter to run in a forward direction to charge the storage battery if the generation power of the wind power generation device is greater than the limited generation power of the power grid, so that the output power of the wind energy inverter is smaller than or equal to the limited generation power of the power grid; and
controlling, by the control device, the bidirectional DC/DC converter to run in a reverse direction to discharge the storage battery if the generation power of the wind power generation device is smaller than the limited generation power of the power grid, wherein the output power of the wind energy inverter is smaller than or equal to the limited generation power of the power grid.

10. The method according to claim 9, wherein, the charging power for the storage battery equals to a difference between the generation power of the wind power generation device and the limited generation power of the power grid, and the discharging power for the storage battery equals to a difference between the limited generation power of the power grid and the generation power of the wind power generation device.
